# FASCICULE DE BREVET EUROPEEN

(11) **EP 3 380 401 B1**
(45) Date de publication et mention de la délivrance du brevet: **13.11.2019**
(21) Numéro de dépôt: 16813083.9
(22) Date de dépôt: 24.11.2016
(51) Int. Cl.: B67C 9/00, B65B 57/14, B65B 3/06, B65B 43/44, B67B 7/00, B65B 3/12, B67B 7/04, B65B 7/28, B65B 69/00, B65B 43/52, B65B 25/00, B65B 37/06, B65B 37/02, B65B 31/02, B65B 3/26, B65B 31/04, B65B 39/00, B67C 3/26

(54) **DISPOSITIF ET PROCÉDÉ D'ÉCHANTILLONNAGE D'UN LIQUIDE**
VORRICHTUNG UND VERFAHREN ZUR PROBENAHME EINER FLÜSSIGKEIT
DEVICE AND METHOD FOR SAMPLING A LIQUID

(30) Priorité: 24.11.2015 FR 1561291
(43) Date de publication de la demande: 03.10.2018
(73) Titulaire: Henry, Grégoire, 69300 Caluire Et Cuire (FR); Destremau, Tristan, 69160 Tassin La Demi Lune (FR)
(72) Inventeur: Henry, Grégoire, 69300 Caluire Et Cuire (FR); Destremau, Tristan, 69160 Tassin La Demi Lune (FR)
(74) Mandataire: Cabinet Laurent & Charras
(86) Numéro de dépôt international: PCT/FR2016/053085
(87) Numéro de publication internationale: WO 2017/089717

(56) Documents cités:
- EP-A1- 0 403 171
- WO-A1-2015/136166
- WO-A2-01/42087
- AU-A- 3 906 672
- FR-A1- 2 650 816
- FR-A1- 2 987 041

## Description

La présente invention se rapporte à un procédé automatisé d'échantillonnage d'un liquide pouvant être sensible au contact de l'air, par exemple une boisson alcoolisée et notamment du vin, par transvasement sous atmosphère inerte d'un premier contenant renfermant le liquide à échantillonner dans des récipients finaux de volume plus petit, fermés hermétiquement.

Les boissons alcoolisées, en particulier le vin, sont généralement conditionnées dans des bouteilles de contenance standard (75 cl) en vue de leur commercialisation. De telles bouteilles renferment une quantité de boisson relativement importante correspondant à la contenance de plusieurs verres. Le prix de vente d'une bouteille individuelle peut être assez élevé, notamment pour les vins de qualité ayant vieilli en bouteille un certain nombre d'années.

Or, il est connu que le vin, comme d'autres liquides ou boissons alcoolisées, est sensible au contact de l'air, en particulier de l'oxygène contenu dans l'air. Une fois la bouteille débouchée et le vin mis en contact avec l'oxygène de l'air, le vin s'oxyde assez rapidement et ses qualités organoleptiques se dégradent. Il est donc important de consommer rapidement le contenu d'une bouteille après son ouverture.

En raison du coût des bouteilles et de leur faible durée de conservation une fois entamée, les producteurs, cavistes et autres vendeurs de vin sont réticents à ouvrir leurs bouteilles pour faire déguster leurs vins aux potentiels acheteurs. Les acheteurs doivent donc choisir les bouteilles qu'ils souhaitent acquérir sans les avoir goûtées préalablement ou doivent avoir l'opportunité de participer aux rares animations commerciales de dégustation. Les acheteurs peuvent ainsi hésiter avant d'investir des sommes parfois importantes pour l'achat de bouteilles, sur la base des seules informations données sur l'étiquette, des conseils d'un vendeur ou de la notation d'un critique.

La mise à disposition des vendeurs et de leurs potentiels acheteurs d'échantillons de ces bouteilles de vin serait un réel avantage. Elle permettrait de pouvoir faire déguster aux acheteurs potentiels de petites quantités de vin ou autres boissons alcoolisées, sur place ou à domicile pour le consommateur ou le professionnel, sans avoir à ouvrir une bouteille de celui-ci. Cet échantillon, de moindre coût, pourrait alors être offert gracieusement par le vendeur ou commercialisé à un faible prix. Le coût d'envoi postal d'échantillons est également largement inférieur à celui d'une bouteille de 75 cl.

L'acheteur pourrait ainsi se faire son opinion personnelle sur la qualité d'un vin avant de procéder à l'achat d'une ou plusieurs bouteilles de celui-ci. Il pourrait également déguster plusieurs millésimes d'un même vin et comparer l'état de maturation de celui-ci selon les années, afin de choisir celui qu'il préfère. De telles dégustations préalables à l'acte d'achat sont très importantes dans un domaine comme celui de la vente du vin ou autres boissons alcoolisées, domaine dans lequel l'appréciation de la qualité est très subjective et dépend des goûts de chacun.

Cela permettrait également au vendeur de distribuer des échantillons gratuits à la suite d'un premier achat ou lors d'opérations promotionnelles ou de manifestations variées, voire même par correspondance, en vue de susciter d'autres achats ultérieurs. Le vendeur pourrait ainsi faire valider le choix prévisionnel de son client, illustrer par la dégustation la description qu'il lui en a faite, faire découvrir des vins méconnus ou injustement mésestimés, améliorer la vente d'un vin qu'il souhaite mettre en avant ou déstocker, ou encore par exemple prouver la bonne conservation d'un vin que l'on aurait tendance à croire trop vieux.

D'autres applications, telles que par exemple l'aide à la notation des critiques de vin, la formation des œnologues, des sommeliers ou autres personnes impliquées dans le commerce ou la dégustation du vin ou tout simplement des amateurs éclairés, peuvent encore être citées.

Enfin, de tels échantillons pourraient également satisfaire les personnes qui désirent consommer une petite quantité d'un vin, un verre par exemple, et qui sont souvent réticentes à ouvrir une bouteille juste pour cela, sachant que le contenu restant va probablement se gâter. La mise à disposition de ces personnes d'échantillons dont le contenu correspond préférentiellement à un verre de vin permettrait ainsi par exemple de faire plaisir ponctuellement à un consommateur solitaire ou à plusieurs convives souhaitant choisir des vins différents correspondant à leur goût personnel.

Pour toutes ces raisons, il serait très avantageux et particulièrement souhaitable de disposer d'un dispositif et d'un procédé automatisé d'échantillonnage permettant de transvaser le contenu d'une ou plusieurs bouteilles de vin ou autre boisson alcoolisée dans plusieurs récipients de volume inférieur hermétiquement fermés.

Cependant, pour garder ce caractère avantageux, il est fortement préférable que le vin, ou autre boisson alcoolisée, transvasé ne subisse aucune dégradation de ses propriétés organoleptiques lors de l'échantillonnage. En effet, comme déjà exposé précédemment, les boissons alcoolisées et notamment le vin sont particulièrement sensibles à la présence d'oxygène.

Si certains dispositifs d'échantillonnage de vin sont connus dans l'art antérieur, aucun ne permet de réaliser entièrement le procédé de transvasement et d'échantillonnage sans contact entre le vin et l'oxygène de l'air ambiant. De manière générale, dans l'art antérieur, la bouteille de vin à échantillonner est d'abord débouchée à l'air libre avant d'être engagée dans un dispositif et de recevoir un embout étanche à travers lequel le vin sera aspiré. De la même façon, dans l'art antérieur, un contact entre l'air et le vin est possible pendant l'étape de fermeture des tubes d'échantillon qui ne se déroule pas dans une enceinte confinée sous atmosphère inerte. Cette mise en contact du vin avec l'oxygène de l'air ambiant pendant le processus d'échantillonnage peut être la cause d'un endommagement du vin ou du moins d'une évolution du vin contenu dans le tube différente de celui contenu dans les bouteilles jumelles de celle vidée pour réaliser l'échantillonnage.

A titre d'exemple le document FR 2 987 041 divulgue un dispositif et un procédé de reconditionnement de vin. Ce document a pour but de reconditionner des bouteilles de vin pouvant être abîmées notamment lorsque les bouchons sont susceptibles de perdre leurs propriétés d'origine. Il s'agit donc de transvaser le vin dans de nouveaux récipients dont la contenance est identique à celle des bouteilles d'origine. Il ne s'agit pas d'échantillonner du vin. Les bouteilles ne sont pas ouvertes, elles sont intégralement placées à l'intérieur du dispositif grâce à une trappe, puis cassées, avant que le vin ne soit récupéré et filtré. Ainsi, le vin est en contact avec les fragments de bouteilles cassées. Le remplissage des nouvelles bouteilles est réalisé à l'extérieur du dispositif, ce qui permet d'optimiser ses dimensions. Ce document divulgue par ailleurs une solution alternative consistant à déboucher et à vider les bouteilles à l'intérieur du dispositif plutôt que de les casser. Il est précisé que la mise en œuvre de cette solution se fait au détriment de l'optimisation des dimensions dudit dispositif.

Les documents WO 2015/136166 et WO 01/42087 divulguent des dispositifs d'échantillonnage du vin dans des verres. Ces verres peuvent ensuite être fermés au moyen d'opercules, à l'extérieur des dispositifs. Là encore, le vin est en contact avec de l'oxygène au moins entre le remplissage d'un verre et la pose d'un opercule sur celui-ci. Le document AU 39066 72 décrit un dispositif de stérilisation et de conditionnement aseptisé de produits alimentaires. Il ne s'agit pas d'un dispositif d'échantillonnage et le procédé de stérilisation décrit n'est pas du tout adapté pour du vin. En outre, l'ensemble du procédé est réalisé au contact de l'oxygène.

Afin d'assurer une conservation du vin échantillonné malgré cette mise en contact avec l'oxygène pendant le procédé de transvasement, il est préconisé dans l'art antérieur de sulfiter le vin contenu dans la bouteille après l'avoir débouchée et avant de la passer dans le dispositif d'échantillonnage. Même s'il permet une meilleure conservation du vin dans les échantillons, cet ajout de souffre est particulièrement désavantageux car il incommode un certain nombre de consommateurs, il est incompatible avec certain types de vins (notamment les vins élaborés sans ajout de sulfites, dits vin sans soufre) et il peut dénaturer les propriétés organoleptiques du vin contenu dans l'échantillon qui s'en trouve modifié par rapport au vin contenu dans la bouteille originelle.

L'invention fournit au contraire un dispositif permettant de mettre en œuvre un procédé d'échantillonnage, qui comprend une enceinte fermée dans laquelle règne une atmosphère inerte et dans laquelle l'ensemble des opérations d'échantillonnage sont réalisées. L'invention fournit également un procédé d'échantillonnage dans lequel toutes les étapes sont entièrement réalisées sous atmosphère inerte, du débouchage initial des bouteilles jusqu'à l'étape de fermeture étanche des récipients finaux. Ce procédé met en œuvre ledit dispositif. Le dispositif selon l'invention comprend donc une enceinte qui est sous atmosphère inerte lors de toutes les opérations de débouchage et vidange du récipient initial, puis de remplissage et fermeture des récipients finaux. Contrairement aux dispositifs de l'art antérieur, le dispositif selon l'invention permet de réaliser toutes les étapes d'échantillonnage dans une seule enceinte, sans contact avec le milieu extérieur.

Pour résoudre ce problème technique, l'invention enseigne un dispositif et un procédé d'échantillonnage d'un liquide pouvant être sensible au contact de l'air, permettant de transvaser un liquide, préalablement contenu dans un récipient initial fermé, dans plusieurs récipients finaux de contenance inférieure à celle du récipient initial.

Selon l'invention, ce dispositif comprend :
- une enceinte dans laquelle règne une atmosphère inerte,
- un sas d'entrée d'au moins un récipient initial, réalisant l'interface entre l'extérieur exposé à l'air ambiant et l'entrée de l'enceinte, et comprenant au moins un moyen de réception qui communique avec l'intérieur de l'enceinte,
- un sas d'entrée de récipients finaux, réalisant l'interface entre l'extérieur exposé à l'air ambiant et l'entrée de l'enceinte, et comprenant au moins un moyen d'introduction qui communique avec l'intérieur de l'enceinte, dans lequel les récipients finaux peuvent être entièrement engagés depuis l'extérieur,
- un sas de sortie, réalisant l'interface entre la sortie de l'enceinte et l'extérieur exposé à l'air ambiant. A travers ce sas de sortie, les récipients finaux hermétiquement fermés sont évacués vers l'extérieur de l'enceinte.

Le cas échéant, le dispositif peut comprendre un sas d'entrée pour introduire des moyens de fermeture des récipients finaux. Ces moyens de fermeture peuvent également être introduits avec les récipients finaux. C'est notamment le cas lorsque le récipient final intègre son moyen de fermeture, par exemple les moyens de fermeture de type bouchon à étrier ou bouchon à bascule.

Selon l'invention, l'enceinte comprend les moyens suivants, qui sont avantageusement placés sous atmosphère inerte :
- un poste d'ouverture comprenant un moyen d'ouverture d'au moins un récipient initial engagé dans l'au moins un moyen de réception du sas d'entrée,
- un bac de collecte, situé en dessous du poste d'ouverture ou communiquant avec celui-ci afin de recueillir le liquide contenu dans cet au moins un récipient initial,
- un poste de remplissage des récipients finaux à partir du liquide recueilli dans le bac de collecte,
- un poste de fermeture hermétique des récipients finaux.

Le moyen de réception du sas d'entrée est configuré de manière à ce que le au moins un récipient initial soit au moins partiellement engagé depuis l'extérieur jusqu'à ce que la partie destinée à être ouverte dudit récipient initial débouche à l'intérieur de l'enceinte.

Selon un mode de réalisation de l'invention, l'enceinte comprend une centrale de régulation et de traitement permettant :
- de réguler la proportion de gaz inerte contenue dans le volume, et/ou
- de maintenir sa qualité (piège à oxygène, ...), et/ou
- de maîtriser la concentration particulaire, et/ou
- de maîtriser les paramètres tels que la température, l'humidité et la pression relative.

Cette centrale de régulation et de traitement gère également les flux d'air ambiant en soufflage ou aspiration afin de purger les parties du dispositif devant être soit remplies de gaz inerte pour le processus, soit ouvertes à l'air libre pour opération et maintenance.

Selon un mode de réalisation de l'invention, le sas d'entrée comprend plusieurs moyens de réception et le poste d'ouverture comprend plusieurs moyens d'ouverture prévus pour ouvrir simultanément plusieurs récipients initiaux.

Le moyen d'ouverture est actionnable depuis l'extérieur du dispositif, tout comme tous moyens de remplissage et de fermeture des récipients finaux.

Selon un autre mode de réalisation, le poste de remplissage comprend des moyens permettant de remplir plusieurs récipients finaux simultanément.

L'invention enseigne enfin l'utilisation du dispositif d'échantillonnage selon l'invention pour l'échantillonnage de vin ou d'un autre liquide alimentaire ou boisson alcoolisée.

Avantageusement, l'invention enseigne également un procédé d'échantillonnage comprenant les étapes suivantes :
- fournir au moins un récipient initial, fermé, contenant un liquide,
- fournir plusieurs récipients finaux vides de contenance inférieure à celle de cet au moins un récipient initial,
et les étapes suivantes, toutes réalisées sous atmosphère inerte :
- ouvrir cet au moins un récipient initial,
- vider cet au moins un récipient initial et recueillir ledit liquide qui y était contenu dans un bac de collecte,
- remplir des récipients finaux avec une portion dudit liquide provenant du bac de collecte, et
- fermer hermétiquement les récipients finaux remplis dudit liquide.

Ce procédé est avantageusement réalisé au moyen du dispositif d'échantillonnage selon l'invention.

Selon un mode de réalisation, préalablement à la mise en œuvre de ce procédé, le dispositif d'échantillonnage est mis sous atmosphère inerte, une pluralité de récipients finaux étant dans ledit dispositif d'échantillonnage. Ainsi, il est préférable d'introduire la quantité nécessaire de récipients finaux à l'intérieur du dispositif avant de mettre en œuvre le procédé.

Selon un autre mode de réalisation, les récipients finaux sont introduits au fur et à mesure du procédé, par l'intermédiaire d'un sas. Ils sont vides et ouverts lorsqu'ils sont introduits. Le sas permet de purger l'air ambiant, notamment l'oxygène.

Selon un autre mode de réalisation, les récipients finaux sont fabriqués à l'intérieur de la machine, au fur et à mesure du procédé, à partir de matières premières introduites avant ou pendant la mise en œuvre du procédé.

Selon un mode de réalisation préférentiel de l'invention, l'au moins un récipient initial fourni contient du vin, ou un autre liquide alimentaire ou boisson alcoolisée. Le récipient initial comprend généralement entre 0,375 et 15 litres de liquide, avantageusement entre 0,75 et 4,5 litres, plus avantageusement entre 0,75 et 1,5 litres. De manière encore plus avantageuse, le récipient initial comprend 0,75 litre de liquide.

Selon une variante de l'invention, on fournit simultanément plusieurs récipients initiaux.

Selon une autre variante, on fournit des récipients finaux de contenance inférieure à 5 cl et préférentiellement comprise entre 1 et 3 cl.

Selon une autre variante de l'invention, on fournit des récipients finaux de contenance sensiblement équivalente à un verre de boisson, c'est-à-dire entre 7 et 20 cl.

Selon un mode de réalisation de l'invention, on fournit une enceinte dans laquelle on génère une atmosphère inerte à partir d'un ou plusieurs gaz peu réactifs, préférentiellement de l'azote, de l'argon ou du dioxyde de carbone, et à l'intérieur de laquelle toutes les étapes du procédé réalisées sous atmosphère inerte sont entièrement menées. Cette atmosphère inerte comprend généralement moins de 5000 ppm d'oxygène, plus avantageusement moins de 1000 ppm d'oxygène, encore plus avantageusement moins de 100 ppm. Dans la pratique, l'atmosphère comprend moins de 50 ppm d'oxygène et plus avantageusement moins de 10 ppm d'oxygène. L'homme du métier saura adapter les conditions de purge en fonction de la quantité d'oxygène seuil à ne pas dépasser, celle-ci pouvant dépendre de la nature du liquide à échantillonner.

Ainsi, l'atmosphère des récipients finaux peut être contrôlée, par exemple en fournissant un mélange de gaz inertes.

Selon un autre mode de réalisation, l'au moins un récipient initial n'est que partiellement engagé dans ladite enceinte. De préférence, seule la partie du récipient initial destinée à être ouverte afin de vider le récipient est engagée dans ladite enceinte. Il s'agit par exemple du goulot d'une bouteille, du col ou de l'embouchure d'une caisse-outre ou d'un cubitainer, ou encore du robinet d'une cuve, d'un fut ou d'une barrique. Dans ce cas, le récipient initial partiellement engagé contribue à l'étanchéité du dispositif au niveau du sas d'entrée.

Selon un mode de réalisation de l'invention, les récipients finaux sont remplis l'un après l'autre.

Selon une autre variante de l'invention, plusieurs récipients finaux sont remplis simultanément.

Selon un mode de réalisation, les récipients finaux remplis sont fermés hermétiquement, directement par soudage ou collage, ou au moyen d'une pièce indépendante rapportée telle que par exemple un opercule, une capsule ou un bouchon.

Le procédé et le dispositif selon l'invention permettent de réaliser l'échantillonnage entièrement sous atmosphère inerte et sans aucun contact entre le liquide, préférentiellement du vin, et l'oxygène de l'air. Un des avantages peut être de ne pas avoir à sulfiter le vin comme dans l'art antérieur, cette opération ayant pour but de piéger l'oxygène s'étant introduit dans le vin. Ainsi, l'invention permet d'avoir une meilleure conservation des qualités organoleptiques du liquide à échantillonner, plus particulièrement du vin.

Le procédé d'échantillonnage selon l'invention ne génère pas de modifications du vin. Le vin reconditionné dans les échantillons (récipients finaux) se trouve dans le même état que celui contenu dans les bouteilles initiales. Aucune modification substantielle, ni évolution ou encore altération du vin originel n'est à craindre grâce à l'absence de contact avec l'air ambiant pendant toutes les étapes du procédé. En effet, pendant toutes ces étapes, le dispositif selon l'invention permet de gérer la quantité d'oxygène présent mais aussi la température et la pression d'échantillonnage ou l'élimination d'éventuelles particules par exemple par filtration.

Le vin reconditionné dans les récipients finaux reste ainsi très semblable à celui contenu dans les bouteilles jumelles du même millésime et conserve les qualités organoleptiques de la bouteille mère. Tout espace vide des récipients finaux est rempli de gaz inerte.

En outre, le fait que, selon une variante préférentielle de l'invention, les bouteilles initiales ne soient pas introduites entièrement dans l'enceinte sous atmosphère inerte, procure des avantages supplémentaires. En effet, grâce au sas d'entrée et à son moyen de réception, les bouteilles initiales peuvent être mises en place et évacuées hors du dispositif beaucoup plus facilement que si elles étaient entièrement placées dans l'enceinte sous atmosphère inerte, et ce sans générer de perturbations notables de cette atmosphère inerte.

Comme seule une partie du récipient initial destinée à être ouverte est engagée dans le sas de l'enceinte sous atmosphère inerte, le volume de ce dernier peut être beaucoup plus restreint que s'il devait contenir l'intégralité des récipients initiaux. L'enceinte et son système de génération d'atmosphère inerte sont de ce fait moins coûteux, moins volumineux et plus simples à mettre en œuvre, alors même que, contrairement aux dispositifs de l'art antérieur, ils peuvent traiter plusieurs récipients initiaux simultanément.

Pour récupérer ensuite dans un bac de collecte le vin de la(es) bouteille(s) introduite(s) dans le sas sous atmosphère inerte, avant remplissage des récipients finaux, différents moyens peuvent être utilisés, avantageusement par :
- débouchage de la bouteille puis déversement du liquide par gravité, ou par
- débouchage de la bouteille puis insertion d'un tuyau d'aspiration du liquide jusqu'au fond de la bouteille, ou par
- passage d'une aiguille à travers le bouchon en liège (si bouchon en liège) jusqu'au fond de la bouteille puis aspiration du liquide.

Pour cela, tous moyens connus de l'état de l'art peuvent être utilisés (notamment tire-bouchon classique, bi-lame, insertion d'une aiguille à travers le bouchon puis extraction par surpression, poussage du bouchon à l'intérieur, dévissage dans le cas d'un bouchon à visser, perforation, etc). L'un des avantages de l'invention est de réaliser cette opération sous atmosphère inerte, ce qui permet au liquide de ne pas entrer en contact avec l'air ambiant, même à l'ouverture. De manière générale, l'ouverture du récipient initial est réalisée sans le casser. Ainsi, une fois le récipient initial ouvert, son contenu est versé et n'entre plus en contact avec le matériau constituant le récipient initial. Cela permet d'éviter de souiller le liquide devant être échantillonné, ce qui est difficilement réalisable lorsque le récipient initial est cassé.

Les actionneurs permettant le mouvement des organes de débouchage sont soit intégrés dans le sas, soit extériorisés.

Dans un mode préférentiel, le procédé d'échantillonnage est stationnaire, du fait de sa caractéristique industrielle permettant ainsi des hautes cadences de réalisation avantageusement entre 10 et 200 échantillons par minute, et dans un mode préférentiel entre 20 et 40.

Selon un mode de réalisation de l'invention, la machine dispose d'un mode de cycle de nettoyage à l'aide d'une solution adéquate. Ce nettoyage peut se limiter aux sas d'entrée, au sas de sortie, au cœur de l'enceinte, ou être complet. Ce cycle permet de préparer la machine pour le cycle d'échantillonnage des bouteilles suivantes.

Le nettoyage peut être sommaire (soufflage d'air, injection d'eau) ou aller jusqu'à une stérilisation complète des organes du dispositif selon l'invention.

Dans une de ses variantes, l'invention est associée à un ensemble de tests permettant de certifier la conservation du vin au cours du processus.

D'autres caractéristiques et avantages de l'invention apparaîtront à la lecture de la description détaillée qui va suivre, description faite en référence aux dessins annexés, dans lesquels :
- la figure 1 est une vue générale schématique d'un mode de réalisation particulier du dispositif d'échantillonnage selon l'invention permettant de transvaser plusieurs bouteilles et de remplir plusieurs récipients finaux simultanément ;
- la figure 2 illustre un mode de réalisation particulier d'un sas d'entrée de récipients initiaux et un poste d'ouverture du dispositif d'échantillonnage selon l'invention permettant de transvaser une seule bouteille et de remplir un seul récipient final à la fois.

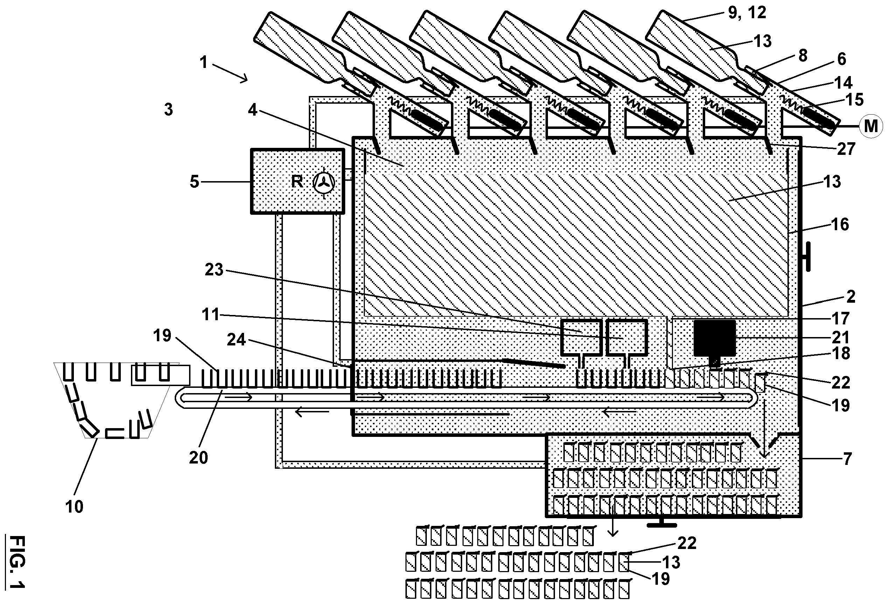

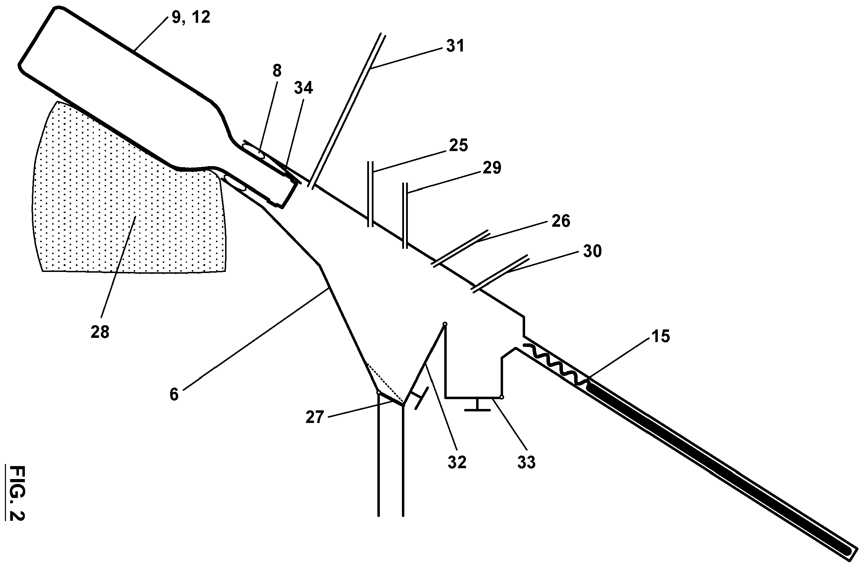

Le procédé et le dispositif d'échantillonnage selon la présente invention vont maintenant être décrits de façon détaillée en référence aux figures 1 et 2. Les éléments équivalents représentés sur les différentes figures porteront les mêmes références numériques. Les caractéristiques ci-après concernent tous les modes de réalisation de l'invention, et ne sont en aucun cas limitées à ceux illustrées par les figures 1 et 2. Elles concernent donc tous les dispositifs selon l'invention, par exemple les dispositifs ayant un ou plusieurs sas d'entrée 6, les dispositifs ayant tout type de moyen d'ouverture 15 (notamment tire-bouchon classique, bi-lame, insertion d'une aiguille à travers le bouchon puis extraction par surpression, poussage du bouchon à l'intérieur, dévissage dans le cas d'un bouchon à visser, perforation, etc).

Le dispositif d'échantillonnage 1 comprend une enceinte 2 fermée, isolée du milieu extérieur 3 exposé à l'air ambiant, et dans laquelle règne une atmosphère inerte 4.

Cette atmosphère inerte 4 est préférentiellement réalisée à partir d'un gaz ou d'un mélange de gaz peu réactif(s), par exemple de l'azote, de l'argon ou du dioxyde de carbone, qui sont injectés dans l'enceinte 2 en remplacement de l'air. Le dispositif 1 peut alors comprendre une réserve de gaz non représentée et des moyens de régulation 5 adaptés pour contrôler la quantité, la température, la pression des gaz inertes à l'intérieur de l'enceinte 2.

L'enceinte 2 est avantageusement munie d'un sas d'entrée 6 des récipients initiaux, d'un sas d'entrée 24 des récipients finaux vides et d'un sas de sortie 7 des récipients finaux remplis. Ces sas réalisent l'interface entre le milieu extérieur 3 et l'intérieur de l'enceinte 2 sous atmosphère inerte 4. Ils permettent un fonctionnement en continu du dispositif d'échantillonnage 1 selon l'invention, sans avoir à ouvrir l'enceinte 2 et à perturber l'atmosphère inerte 4 qui s'y trouve.

Le sas d'entrée des récipients initiaux 6 est positionné préférentiellement sur le dessus du dispositif.

Il comprend avantageusement deux portes (34 et 27, figure 2), la première assurant l'entrée du sas (interface avec l'extérieur) et la deuxième assurant la sortie du sas (interface avec l'enceinte inerte 2). Le remplissage du sas d'entrée du récipient initial 6 en gaz inerte est réalisé une fois l'extrémité du récipient initial 9 introduite, et l'étanchéité faite autour de cette extrémité (par joint pneumatique ou autre), afin de permettre ensuite la communication avec l'enceinte inerte 2. La taille de ce sas est avantageusement réduite au maximum afin de diminuer les pertes de quantités de gaz inerte lors de la purge du sas.

Les bouchons, morceaux de bouchons et les dépôts naturels contenus dans les vins peuvent avantageusement être évacués au niveau du sas d'entrée des récipients initiaux 6 sans avoir à ouvrir l'enceinte 2 et à perturber l'atmosphère inerte 4 qui s'y trouve.

Pour cela les moyens suivants sont enseignés dans l'invention :
- dispositif permettant de désolidariser le bouchon de son moyen d'extraction de la bouteille et de le stocker dans le sas d'entrée des récipients initiaux 6,
- grille de filtrage du liquide pour retenir les dépôts naturels et morceaux de bouchons,
- système de nettoyage du sas par un liquide adapté pour rendre le dispositif directement et rapidement utilisable pour l'échantillonnage de la(es) bouteille(s) suivante(s).

Selon les variantes, le sas d'entrée 6 comporte un (figure 1) ou plusieurs (figure 2) moyens de réception 8 dans lesquels des récipients initiaux 9 peuvent être partiellement engagés.

De préférence, ces moyens de réception 8 présentent une première partie d'accueil, ouverte et dirigée vers l'extérieur, de forme évasée adaptée à celle du récipient initial 9, qui se prolonge par un conduit traversant, plus étroit, débouchant à l'intérieur de l'enceinte 2.

Comme déjà indiqué, le moyen de réception 8 permet de réaliser l'étanchéité entre l'enceinte 2 et le milieu extérieur 3, avantageusement au moyen d'un joint pneumatique ou tout autre moyen similaire pouvant s'adapter au récipient initial et plus particulièrement au goulot d'une bouteille.

La forme et les dimensions de la partie d'accueil et /ou du conduit traversant sont préférentiellement adaptées à et complémentaires de celles du récipient initial de manière à ce que celui-ci, une fois engagé dans le moyen de réception 8, bouche de manière sensiblement étanche le passage entre l'intérieur de l'enceinte 2 et le milieu extérieur 3.

La porte 34 assurant l'interface 34 entre le sas et le milieu extérieur est optionnelle. Elle correspond à un moyen de fermeture temporaire au niveau de chacun des moyens de réception 8 permettant d'obturer temporairement ce passage en l'absence du récipient initial 9. Il peut par exemple s'agir d'un volet articulé, d'un joint ou d'un peigne à franges souples, ou de tout autre dispositif approprié qui, de préférence, s'efface automatiquement lorsque l'on enfonce le récipient initial 9.

Sur les exemples représentés, les récipients initiaux 9 sont des bouteilles 12 contenant un liquide 13 pouvant être sensible au contact de l'air, à savoir du vin. Evidemment, l'invention peut s'appliquer à d'autres types de récipients initiaux 9, tels que par exemple des caisse-outres, cubitainers, cuves, futs, barriques, bidons, flacons ou autres.

L'invention est particulièrement adaptée à l'échantillonnage du vin, quelle que soit sa nature : rouge, blanc, rosé, liquoreux ou mousseux... Cependant, elle peut également être appliquée à tout autre liquide 13 sensible au contact de l'air et notamment à d'autres liquides alimentaires, alcoolisés ou non, par exemple au whisky, cognac, armagnac, aux huiles végétales (huile d'olives ou autres huiles)...

Dans les modes de réalisation représentés, les moyens de réception 8 sont destinés à recevoir uniquement le goulot de la bouteille 12 qui pénètre dans le conduit traversant et s'enfonce jusqu'à ce que l'épaule de la bouteille arrive en contact avec la partie d'accueil, le fût de la bouteille restant à l'extérieur. La bouteille 12 est alors calée, avantageusement en position oblique (en général 25 à 65 ° par rapport à l'horizontale) vers le bas, l'extrémité de son col émergeant dans le sas d'entrée 6. Elle est ainsi parfaitement positionnée pour les étapes suivantes de procédé et notamment son vidage après ouverture.

Le sas d'entrée 6 renferme un poste d'ouverture 14 qui comprend un moyen d'ouverture 15 capable d'ouvrir un récipient initial 9 lorsqu'il se trouve engagé dans un moyen de réception 8.

La nature du moyen d'ouverture 15 dépend de l'application envisagée et du mode de fermeture classique des récipients initiaux 9 pour cette application. Il peut ainsi s'agir par exemple, comme représenté, d'un moyen à tire-bouchon ou d'un moyen de dévissage ou de perforation.

Le moyen d'ouverture 15 peut être unique comme dans le mode de réalisation de la figure 2. Dans le cas où le dispositif 1 comprend plusieurs moyens de réception 8 (figure 1), ce moyen d'ouverture 15 unique ouvre successivement tous les récipients initiaux 9 présents dans les moyens de réception 8.

Le poste d'ouverture 14 peut également comprendre plusieurs moyens d'ouverture 15 capables d'ouvrir plusieurs récipients initiaux 9 simultanément, comme sur la figure 1. Les moyens d'ouverture 15 peuvent être actionnés simultanément grâce à une motorisation M.

Un bac de collecte 16 est également présent dans l'enceinte 2 afin de recueillir le liquide s'écoulant hors des récipients initiaux 9, une fois ceux-ci ouverts par les moyens d'ouverture 15. Pour cela, le bac de collecte 16 est préférentiellement situé sous le poste d'ouverture 14 présent dans le sas d'entrée des récipients initiaux 6 ou peut communiquer avec celui-ci lorsque le sas est mis sous atmosphère inerte lui aussi.

En partie inférieure du bac de collecte 16 se trouve(nt) un ou plusieurs conduits de vidange 17 débouchant au niveau d'un poste de remplissage 18 dans lequel sont placés ou amenés les récipients finaux 19.

Les récipients finaux 19 suivent préférentiellement le cycle automatisé suivant :
- amenée par un bol vibrant 10 distributeur de récipients,
- transfert des récipients sur convoyeur 20,
- convoyage avec posage intégré,
- purge des récipients, avantageusement à l'azote, dans un atelier de nettoyage 23,
- séchage des récipients dans un atelier de séchage 11,
- remplissage en liquide,
- dépose d'un bouchon 22 tel qu'un opercule puis solidarisation du bouchon et du récipient notamment par thermocollage (cas d'un opercule) ou vissage d'un bouchon (cas d'un bouchon vissé).

Un système de vannes, non représenté et préférentiellement automatique, peut fermer ou ouvrir les conduits de vidange 17 afin permettre l'écoulement par ces conduits de vidange 17 du liquide 13 provenant du bac de collecte 16, et provoquer ainsi le remplissage des récipients finaux 19 placés à la sortie de ces conduits de vidange 17 dans le poste de remplissage 18.

Selon les variantes, le dispositif peut comprendre un ou plusieurs conduit(s) de vidange 17. Les différents récipients finaux 19 peuvent être remplis les uns après les autres dans le poste de remplissage 18 ou simultanément.

Selon un mode de réalisation particulier, des capteurs de niveau de remplissage, associés à des vannes et pompes de précisions, sont utilisés pour déterminer précisément le volume nécessaire à introduire dans les récipients. Ces derniers seront remplis entièrement ou partiellement.

Tout espace vide du récipient est rempli de gaz inerte, de manière à créer une atmosphère non réactive pour le liquide dans son récipient final. Le liquide pourra ainsi être conservé plusieurs mois dans sa dosette sans évolution de ses qualités organoleptiques.

Les récipients finaux 19 peuvent être de nature et de forme quelconque du moment qu'ils conviennent pour la conservation du liquide 13 à échantillonner et qu'ils sont de contenance adaptée inférieure à celle du récipient initial 9. Il peut s'agir par exemple de capsules, de tubes, de flacons, de dosettes, de petites bouteilles (mignonettes ou autres), de poches souples, de berlingots, ou autres. Ils peuvent être réutilisables ou à usage unique, et sont réalisés en un matériau adapté quelconque, par exemple en matière plastique, verre, aluminium ou autre métal, bois, liège, etc. Avantageusement, ils peuvent être prévus dans une matière permettant de protéger de la lumière le liquide qu'ils contiennent.

Le dispositif d'échantillonnage 1 selon l'invention est préférentiellement automatisé sans nécessiter d'intervention humaine à l'intérieur de l'enceinte 2. Les récipients finaux 19 peuvent ainsi être automatiquement menés d'un poste à l'autre, par exemple au moyen d'un convoyeur 20 comme représenté.

L'enceinte 2 contient également un poste de fermeture hermétique 21 des récipients finaux 19 dans lequel ces derniers sont conduits une fois remplis dans le poste de remplissage 18. Dans ce poste, les récipients finaux 19 sont fermés de manière étanche et hermétique de façon à garantir que le liquide 13 qu'ils contiennent reste à l'abri de l'air lorsque les récipients finaux auront quitté l'enceinte 2 sous atmosphère inerte.

Cette fermeture hermétique peut être réalisée de différentes manières selon la nature et la composition des récipients finaux. Ils peuvent ainsi par exemple être directement scellés, soudés ou collés. Une pièce indépendante 22, telle que par exemple un opercule, une capsule ou un bouchon, peut également être rapportée et solidarisée sur l'ouverture de ces récipients, notamment par soudage, thermo-soudage, collage, scellage, sertissage, vissage, enfoncement ou autre. Le cas échéant, la pièce indépendante 22 peut être introduite avec les récipients finaux ou au moyen d'un sas dédié à l'introduction de pièces indépendantes 22.

Une fois hermétiquement fermés, les récipients finaux sont conduits, de préférence au moyen du convoyeur 20, vers le sas de sortie 7 à travers lequel ils sont évacués vers l'extérieur de l'enceinte 2.

Le sas de sortie des récipients finaux remplis 7 est positionné préférentiellement sur le côté ou en dessous du dispositif. Il est avantageusement constitué de deux portes, la première assurant l'entrée du sas (interface avec l'enceinte inerte 2) et la deuxième assurant la sortie du sas (interface avec l'extérieur). Dans le processus, la première porte est nominalement ouverte et la seconde fermée, donc le sas est rempli de gaz inerte car en contact direct avec l'enceinte 2. Pour l'extraction des récipients remplis, le remplissage du sas en air ambiant est réalisé une fois un nombre déterminé de récipients finaux remplis introduits, afin de permettre ensuite la communication avec l'extérieur.

La taille de ce sas est avantageusement réduite au maximum afin de diminuer les pertes de quantités de gaz inerte lors de la purge du sas.

La structure du dispositif dispose préférentiellement des moyens répondant à une logique pratique et industrielle :
- châssis et bâti en matériau robuste (acier, tôle, ...) dimensionnés pour répondre aux efforts de mouvement des organes internes et de pression du gaz dans l'enceinte fermée hermétiquement,
- une ou plusieurs faces en matériau transparent (polyméthacrylate de méthyle, verre, ...) afin de pouvoir observer chaque étape du processus automatisé depuis l'extérieur,
- une ou plusieurs portes, dont l'autorisation d'ouverture peut être asservie à un vidage préalable des gaz inertes (pour éviter tout danger pour l'homme), afin de notamment accéder au bac de collecte, procéder au réglage des actionneurs internes, débloquer certains mécanismes ou récipients.

La figure 2 illustre un mode de réalisation particulier du sas d'entrée 6 d'un récipient initial 9. Ce sas comprend :
- un support 28 pour maintenir un récipient initial 9 tel qu'une bouteille 12 ;
- un premier moyen de réception 8 assurant l'étanchéité entre le récipient initial et le sas ;
- une porte d'interface 34 entre le sas et le milieu extérieur ;
- une porte d'interface 27 entre le sas et l'enceinte 2 ;
- un moyen d'ouverture 15, par exemple un tire-bouchon motorisé ;
- une trappe de purge 32 permettant d'évacuer la solution de nettoyage lorsque le sas 6 est nettoyé ;
- une trappe d'évacuation 33 permettant d'évacuer au moins un bouchon d'au moins un récipient initial. Lorsque plusieurs récipients initiaux sont ouverts, plusieurs bouchons peuvent être stockés dans le sas 6 avant d'être évacués simultanément ;
- un tube 31 d'apport d'une solution de nettoyage permettant de laver le sas 6 ;
- optionnellement un tube 30 d'apport d'air ;
- optionnellement une sortie 25 d'air ;
- un tube 26 d'apport de gaz inerte permettant de mettre le sas 6 sous atmosphère inerte ;
- une sortie 29 de gaz inerte.

Le tube 26 et la sortie 29 peuvent être reliés à la centrale 5 (R) de régulation de l'atmosphère du dispositif 1.

En outre, le dispositif 1 peut comprendre un seul ou une pluralité de sas d'entrée 6 selon la figure 2.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes sans sortir ni de la portée, ni du cadre de l'invention définis par les revendications.

## Revendications

1. Dispositif d'échantillonnage (1) d'un liquide (13) sensible au contact de l'air, permettant de transvaser ce liquide (13), préalablement contenu dans un récipient initial (9) fermé, dans plusieurs récipients finaux (19) de contenance inférieure à celle du récipient initial (9), sans mise en contact du liquide avec l'oxygène de l'air, dispositif (1) comprenant :
- un sas d'entrée (6) d'au moins un récipient initial (9), réalisant l'interface entre l'extérieur (3) exposé à l'air ambiant et l'entrée d'une enceinte (2), et comprenant au moins un moyen de réception (8) qui communique avec l'intérieur de l'enceinte (2),
- une enceinte (2) dans laquelle règne une atmosphère inerte (4), et comprenant :
∘ un poste d'ouverture (14) comprenant un moyen d'ouverture (15) d'au moins un récipient initial (9) engagé dans l'au moins un moyen de réception (8) du sas d'entrée (6),
∘ un bac de collecte (16), situé au dessous du poste d'ouverture (14) ou communiquant avec celui-ci afin de recueillir le liquide (13) contenu dans cet au moins un récipient initial (9),
∘ un poste de remplissage (18) des récipients finaux (19) à partir du liquide (13) recueilli dans le bac de collecte (16),
∘ un poste de fermeture hermétique (21) des récipients finaux (19),
- un sas de sortie (7) des récipients finaux remplis, réalisant l'interface entre la sortie de l'enceinte (2) et l'extérieur (3) exposé à l'air ambiant.

2. Dispositif selon la revendication 1, ***caractérisé* en ce que** le sas d'entrée (6) comprend plusieurs moyens de réception (8), et **en ce que** le poste d'ouverture (14) comprend plusieurs moyens d'ouverture (15) prévus pour ouvrir simultanément plusieurs récipients initiaux (9).

3. Dispositif selon la revendication 1 ou 2, ***caractérisé* en ce que** le poste de remplissage (18) comprend des moyens (17) permettant de remplir plusieurs récipients finaux (19) simultanément.

4. Dispositif selon l'une des revendications 1 à 3, ***caractérisé* en ce que** le moyen de réception du sas d'entrée est configuré de manière à ce que le au moins un récipient initial (9) soit partiellement engagé depuis l'extérieur (3) jusqu'à ce que la partie destinée à être ouverte dudit récipient initial (9) débouche à l'intérieur de l'enceinte (2).

5. Procédé d'échantillonnage d'un liquide (13) comprenant les étapes suivantes :
- fournir un dispositif d'échantillonnage selon l'une des revendications 1 à 4,
- fournir au moins un récipient initial (9), fermé, contenant un liquide (13),
- fournir plusieurs récipients finaux (19) vides de contenance inférieure à celle de cet au moins un récipient initial (9),
et les étapes suivantes, toutes réalisées sous atmosphère inerte :
- ouvrir cet au moins un récipient initial (9),
- vider cet au moins un récipient initial (9) et recueillir ledit liquide (13) qui y était contenu dans un bac de collecte (16),
- remplir des récipients finaux (19) avec une portion dudit liquide (13) provenant du bac de collecte (16), et
- fermer hermétiquement les récipients finaux (19) remplis dudit liquide (13).

6. Procédé selon la revendication 5, ***caractérisé* en ce que** l'on fournit simultanément plusieurs récipients initiaux (9).

7. Procédé selon la revendication 5 ou 6, ***caractérisé* en ce que** les récipients finaux (19) sont remplis l'un après l'autre.

8. Procédé selon l'une des revendications 5 ou 6, ***caractérisé* en ce que** plusieurs récipients finaux (19) sont remplis simultanément.

9. Procédé selon l'une des revendications 5 à 8, ***caractérisé* en ce que** les récipients finaux (19) remplis sont fermés hermétiquement, directement par soudage ou collage, ou au moyen d'une pièce indépendante (22) rapportée telle qu'un opercule, une capsule ou un bouchon.

10. Utilisation du dispositif d'échantillonnage selon l'une des revendications 1 à 4 pour l'échantillonnage de vin ou d'un autre liquide alimentaire ou boisson alcoolisée.

## Patentansprüche

1. Vorrichtung zur Probennahme (1) einer gegenüber Luftkontakt empfindlichen Flüssigkeit (13), zum Dekantieren dieser Flüssigkeit (13) aus einem verschlossenen Ausgangsbehälter (9) in mehrere Endbehälter (19) mit geringerem Fassungsvermögen als der Ausgangsbehälter (9), ohne dass die Flüssigkeit in Kontakt mit dem Luftsauerstoff kommt, die Vorrichtung (1) umfasst:
- eine Einlassöffnung (6) mindestens eines Ausgangsbehälters (9), die die Schnittstelle zwischen dem der Umgebungsluft ausgesetzten Außen (3) und dem Einlass eines Gehäuses (2) darstellt und enthält mindestens ein Aufnahmemittel (8), das mit dem Inneren des Gehäuses (2) in Verbindung steht,
- ein Gehäuse (2) mit einer inerten Atmosphäre (4), das besteht aus:
∘ einer Öffnungsstation (14) mit einem Öffnungsmittel (15) mindestens eines Ausgangsbehälters (9), eingesetzt in das mindestens eine Aufnahmemittel(8) der Einlassöffnung (6),
∘ einem Sammelbehälter (16), der sich unterhalb der Öffnungsstation (14) befindet oder mit dieser in Verbindung steht, um die in diesem mindestens einen Ausgangsbehälter (9) enthaltene Flüssigkeit (13) aufzufangen,
∘ einer Füllstation (18) zum Befüllen der Endbehälter (19) mit der im Sammelbehälter (16) aufgefangenen Flüssigkeit (13),
∘ einer hermetischen Verschlussstation (21) der Endbehälter (19),
- eine Auslassöffnung (7) für die gefüllten Endbehälter, die die Schnittstelle zwischen dem Auslass des Gehäuses (2) und dem der Umgebungsluft ausgesetzten Außen (3) bildet.

2. Vorrichtung nach Anspruch 1, **dadurch gekennzeichnet, dass** die Einlassöffnung (6) mehrere Aufnahmemittel (8) enthält, und dass die Öffnungsstation (14) mehrere Öffnungsmittel (15) enthält, die zum gleichzeitigen Öffnen mehrerer Ausgangsbehälter (9) vorgesehen sind.

3. Vorrichtung nach Anspruch 1 oder 2, **dadurch gekennzeichnet, dass** die Füllstation (18) Mittel (17) zum gleichzeitigen Füllen mehrerer Endbehälter (19) enthält.

4. Vorrichtung nach einem der vorstehenden Ansprüche 1 bis 3 **dadurch gekennzeichnet, dass** die Aufnahmemittel der Einlassöffnung so konfiguriert ist, dass der mindestens eine Ausgangsbehälter (9) teilweise von außen (3) eingeschoben wird, bis der Teil dieses Ausgangsbehälters (9), der offen sein soll, ins Innere des Gehäuses (2) reicht.

5. Verfahren zur Probennahme einer Flüssigkeit (13), das die folgenden Schritte umfasst:
- Bereitstellung einer Vorrichtung zur Probennahme nach einem der Ansprüche 1 bis 4,
- Bereitstellung mindestens eines verschlossenen Ausgangsbehälters (9), der eine Flüssigkeit (13) enthält,
- Bereitstellung mehrerer leeren Endbehälter (19) mit geringerem Fassungsvermögen als dieser mindestens eine Ausgangsbehälter (9) sowie die folgenden Schritte, die alle in einer inerten Atmosphäre durchgeführt werden:
- Öffnen des mindestens einen Ausgangsbehälters (9),
- Leeren des mindestens einen Ausgangsbehälters (9) und Auffangen der darin enthaltenen Flüssigkeit (13) in einem Sammelbehälter (16),
- Füllen der Endbehälter (19) mit einem Teil dieser Flüssigkeit (13) aus dem Sammelbehälter (16), und
- hermetisches Verschließen der mit dieser Flüssigkeit (13) gefüllten Endbehälter (19).

6. Verfahren gemäß Anspruch 5, **dadurch gekennzeichnet, dass** gleichzeitig mehrere Ausgangsbehälter (9) bereitgestellt werden.

7. Verfahren gemäß Anspruch 5 oder 6, **dadurch gekennzeichnet, dass** die Endbehälter (19) nacheinander gefüllt werden.

8. Verfahren gemäß einem der Ansprüche 5 oder 6, **dadurch gekennzeichnet, dass** die mehreren Endbehälter (19) gleichzeitig gefüllt werden.

9. Verfahren gemäß einem der Ansprüche 5 bis 8 **dadurch gekennzeichnet, dass** die gefüllten Endbehälter (19) direkt durch Verschweißen oder Verkleben oder mit einem aufgesetzten, unabhängigen Teil (22), wie einem Deckel, einer Kapsel oder einem Stopfen, hermetisch verschlossen werden.

10. Einsatz einer Vorrichtung zur Probennahme nach einem der Ansprüche 1 bis 4, zur Probennahme von Wein oder anderen zum Verzehr bestimmten Flüssigkeiten oder Alkohol.

## Claims

1. A sampling device (1) of a liquid (13) sensitive to contact with air, making it possible to decant said liquid (13), previously contained within an initial sealed container (9), into several final containers (19) of a capacity that is less than that of the initial container (9), without any contact of the liquid with oxygen, the device (1) comprising:
- an inlet port (6) of at least one initial container (9), providing an interface between the exterior (3) exposed to ambient air and the inlet of an enclosure (2), and comprising at least one receiving means (8) that communicates with the interior of the enclosure (2),
- an enclosure (2) wherein there prevails an inert atmosphere (4), and comprising:
∘ an opening station (14) comprising an opening means (15) of at least one initial container (9) fitted into the at least one receiving means (8) of the inlet port (6),
∘ a collection vessel (16), located beneath the opening station (14) or communicating therewith in order to collect the liquid (13) contained within the at least one initial container (9),
∘ a filling station (18) for filling the final containers (19) with liquid (13) collected within the collection vessel (16),
∘ a sealing station (21) for hermetically sealing the final containers (19),
- an outlet port (7) of the filled final containers, providing an interface between the outlet of the enclosure (2) and the exterior (3) which is exposed to ambient air.

2. The device according to claim 1, ***characterized* in that** the inlet port (6) comprises several receiving means (8), and **in that** the opening station (14) comprises several opening means (15) provided in order to simultaneously open several initial containers (9).

3. The device according to claim 1 or 2, ***characterized* in that** the filling station (18) comprises means (17) that make it possible to fill several final containers (19) simultaneously.

4. The device according to one of claims 1 to 3, ***characterized* in that** the receiving means of the inlet port are configured in such a way that the at least one initial container (9) is partially fitted from the exterior (3) until the part intended to be opened of said initial container (9) emerges into the enclosure (2).

5. A method for sampling a liquid (13) comprising the following steps:
- supplying a sampling device according to one of claims 1 to 4,
- supplying at least one sealed, initial container (9) containing a liquid (13),
- supplying several empty final containers (19) of a capacity that is less than that of the at least one initial container (9),
and the following steps, all performed under an inert atmosphere:
- opening the at least one initial container (9),
- emptying this at least one initial container (9) and collecting said liquid (13) that is contained therein into a collection vessel (16),
- filling the final containers (19) with a portion of said liquid (13) provided by the collection vessel (16), and
- hermetically sealing the final containers (19) filled with said liquid (13).

6. The method according to claim 5, ***characterized* in that** several initial containers (9) are supplied simultaneously.

7. The method according to claim 5 or 6, ***characterized* in that** the final containers (19) are filled consecutively.

8. The method according to one of claims 5 or 6, ***characterized* in that** several final containers (19) are filled simultaneously.

9. The method according to one of claims 5 to 8, ***characterized* in that** the filled final containers (19) are hermetically sealed, directly by means of welding or gluing, or by means of an independent insert (22) such as, for example, a lid, a capsule or stopper.

10. A use of a sampling device according to one of claims 1 to 4 for sampling wine or another liquid food or alcoholic beverage.
